# EUROPEAN PATENT SPECIFICATION

(11) **EP 2 064 765 B1**
(45) Date of publication and mention of the grant of the patent: **07.08.2019**
(21) Application number: 07736782.9
(22) Date of filing: 17.04.2007
(51) Int. Cl.: H01M 8/1004, H01M 8/1011, H01M 4/92, H01M 4/90

(54) **ELECTROCATALYSTS BASED ON MONO/PLURIMETALLIC CARBON NITRIDES FOR POLYMER ELECTROLYTE MEMBRANE FUEL CELLS FUELLED WITH HYDROGEN (PEMFC) AND METHANOL (DMFC) AND FOR HYDROGEN ELECTROGENERATORS**
ELEKTROKATALYSATOR AUS MONO/PLURIMETALLKOHLENSTOFFNITRID FÜR POLYMERELEKTROLYTMEMBRAN-BRENNSTOFFZELLEN MIT WASSERSTOFF (PEMFC) UND METHANOL (DMFC) ALS BRENNSTOFF UND FÜR WASSERSTOFF-ELEKTROGENERATOREN
ÉLECTROCATALYSEURS À BASE DE NITRURES DE CARBONE MONO/PLURIMÉTALLIQUES POUR DES PILES À COMBUSTIBLE À MEMBRANE D'ÉLECTROLYTE POLYMÈRE ALIMENTÉES PAR DE L'HYDROGÈNE (PEFC) ET DU MÉTHANOL (DMFC) ET POUR DES ÉLECTROGÉNÉRATEURS À HYDROGÈNE

(30) Priority: 18.04.2006 IT PD20060141
(43) Date of publication of application: 03.06.2009
(73) Proprietor: Breton S.p.A., 31030 Castello di Godego (TV) (IT)
(72) Inventor: DI NOTO, Vito, I-35010 Cadoneghe (IT); NEGRO, Enrico, I-31100 Treviso (IT); LAVINA, Sandra, I-35100 Padova (IT); PACE, Giuseppe, I-35020 Albignasego (IT)
(74) Representative: Pistolesi, Roberto
(86) International application number: PCT/IT2007/000278
(87) International publication number: WO 2007/119260

(56) References cited:
- WO-A2-2007/098432
- V. DI NOTO: "A novel polymer electrolyte based on oligo(ethylene glycol) 600, K2PdCl4 and K3Fe(CN)6" J. MATER. RES., [Online] vol. 12, no. 12, 1997, pages 3393-3403, XP002447332 Retrieved from the Internet: URL:http://www.mrs.org/s_mrs/bin.asp?CID=2 329&DID=46494&DOC=FILE.PDF> [retrieved on 2007-08-13]
- DI NOTO V ET AL: "Zeolitic inorganic-organic polymer electrolytes: synthesis, characterization and ionic conductivity of a material based on oligo(ethylene glycol) 600, (CH3)2SnCl2 and K4Fe(CN)6" ELECTROCHIMICA ACTA, ELSEVIER SCIENCE PUBLISHERS, BARKING, GB, vol. 46, no. 10-11, 15 March 2001 (2001-03-15), pages 1587-1594, XP004231569 ISSN: 0013-4686
- DI NOTO V ET AL: "The first lithium zeolitic inorganic-organic polymer electrolyte based on PEG600, Li2PdCl4 and Li3Fe(CN)6: part I, synthesis and vibrational studies" ELECTROCHIMICA ACTA, ELSEVIER SCIENCE PUBLISHERS, BARKING, GB, vol. 48, no. 14-16, 30 June 2003 (2003-06-30), pages 2047-2058, XP004431840 ISSN: 0013-4686
- JOSÉ L FERNANDEZ ET AL: "Thermodynamic Guidelines for the Design of Bimetallic Catalysts for Oxygen Electroreduction and Rapid Screening by Scanning Electrochemical Microscopy. M?Co (M: Pd, Ag, Au)", JOURNAL OF THE AMERICAN CHEMICAL SOCIETY, AMERICAN CHEMICAL SOCIETY, US, vol. 127, no. (1), 12 January 2005 (2005-01-12), pages 357-365, XP002548506, ISSN: 0002-7863, DOI: 10.1021/JA0449729 [retrieved on 2004-12-09]

## Description

### TECHNICAL FIELD

The invention concerns the anodic and cathodic electrocatalysts to be used in fuel cells operating at low temperatures and in H₂ electrolyzers together with the methods used to prepare the materials constituting those electrocatalysts.

### BACKGROUND ART

To allow a fuel cell operating at low temperature to produce an adequate amount of current at acceptable potentials it is necessary to achieve a quick and efficient catalytic conversion of the reagents into products. At the anode, the fuel (hydrogen, methanol, ethanol, etc...) is oxidised producing H⁺ ions and other products; at the cathode, the oxidant (air or oxygen) is reduced developing O²⁻ ions. Nowadays, the best electrocatalysts used in fuel cells operating at low temperatures are based upon platinum, either pure or supported on graphite. Electrodic materials are generally produced through an electrochemical reduction of precursors containing platinum and ruthenium on graphite nanopowders (carbon black). The result is an extremely thin black powder characterized by a large surface area and featuring graphite grains covered by metallic platinum. Cathodic electrocatalysts show platinum concentrations equal to 10-20 weight%, while anodic electrocatalysts may also have ruthenium, needed to limit the poisoning effects on the active sites caused by carbon monoxide and other poisoning agents such as halides, ammines, amides produced either by parasitic reactions such as fuel oxidation or present in the reagents in trace amounts. One of the main limits towards the large-scale use of this type of materials is their high cost; besides, it should be pointed out that not every metal may be deposited on graphite-based supports by electrochemical means.

It is reported in the scientific literature that the alloying of a second non-noble metal with platinum may result in an improvement of the electrocatalytic activity of the system. The second metal might also act as a protection for the active sites towards contaminants such as carbon monoxide or halides. These contaminants reduce the activity of the active sites of the noble metal constituting the electrocatalyst. This way it becomes possible to obtain materials showing a higher tolerance towards environmental contaminations, having a longer operating lifetime and a lower cost.

An example of scientific literature on the above matter is Jose L. Fernandez et al.: "Thermodynamic guidelines for the design of bimetallic catalysts for oxygen electroreduction and rapid screening vy Scanning Electrochemical Microscopy. M-Co (M: Pd, Ag, Au)", Journal of the American Chemical Society, American Chemical Society, (2005), vol. 127 (1), pages 357-365. A variety of fuel cell catalysts based on transition metal nitrides on carbon supports are described in WO 2007 /098432 A2.

### DISCLOSURE OF INVENTION

The invention is disclosed in the independent claims 1 and 11-13. The dependent claims describe preferred embodiments. Mono-plurimetallic clusters supported on carbon nitrides or MPM-CN and MPM-CN/oxides electrocatalysts which are the object of this invention can be prepared according to a procedure consisting of three steps, which are outlined below.

**STEP 1.** Preparation of a precursor through chemical reactions based on the following transitions: a) sol-gel; b) gel-plastic; c) coagulation and/or flocculation and/or precipitation.

**STEP 2.** Pyrolyis process carried out under an inert atmosphere of the precursor obtained in STEP 1. STEP 2 yields the MPM-CN or the MPM-CN/oxides electrocatalyst.

**STEP 3.** Procedures to perform the chemical and/or electrochemical activation of the MPM-CN or the MPM-CN/oxides electrocatalyst obtained in STEP 2.

### Detailed description of STEP 1.

Precursors are obtained as described below in a detailed way through: a) complexation reactions of "soft" transition metals with cyanometallate complexes acting as ligands to produce clusters; b) 3-D networking of the obtained clusters with suitable organic molecules and macromolecules. The latter are also the main source of the carbon atoms necessary to provide a good electric conductivity to the MPM-CN or the MPM-CN/oxides electrocatalyst. The selected organic substance must be water-soluble, must not contain sulphur atoms and must be very rich of oxygen atoms. Typical examples include polyethylene glycol, polyvinyl alcohol, glycerol, sucrose, glucose, fructose and in general all the water-soluble macromolecules such as carbohydrates.

Once the most suitable organic compound for the desired synthesis has been chosen, two different solutions are prepared, A and B. The first, solution A, consists of a "soft" transition metal complex coordinated by good leaving groups and an aliquot of organic binder dissolved in water. Typical examples of "soft" transition metal complexes used in the preparation of the solution A are: HAuCl₄, H₂IrCl₆, H₂PtCl₆, Li₂PdCl₄, (NH₄)₂IrCl₆, (NH₄)₂OsCl₆, (NH₄)PdCl₄, (NH₄)₂PdCl₆, (NH₄)₂PtCl₄, (NH₄)₂PtCl₆, (NH₄)₃RhCl₆, (NH₄)₂RuCl₆, KAuCl₄, KPt(NH₃)Cl₃, K₂PdCl₄, K₂PtCl₄, K₂PdCl₆, K₂PtCl₆, K₂ReCl₆, K₂RhCl₆ K₂H₂IrCl₆, K₂H₂OsCl₆, K₃IrCl₆, K₃H₃RuCl₆, Na₂IrCl₆, Na₂OsCl₆, Na₂PdCl₄, Na₂PtCl₆, Na₃RhCl₆, CrCl₃, IrCl₃, FeCl₃, NiCl₂, OsCl₃, PdCl₂, PtCl₂, PtCl₄, RhCl₃, RuCl₃, ReCl₅, SnCl₄, VCl₃, VCl₄, WCl₄, WCl₆, ZrCl₄.

Solution B is obtained by dissolving in water a suitable amount of a metallic cyanometallate complex capable to act as a ligand for "soft" metals, together with an aliquot of the same organic compound used in the preparation of the solution B. Typical examples of cyanometalates which can be used are: KAg(CN)₂, KAu(CN)₂, K₂Ni(CN)₄ K₂Pd(CN)₄, K₂Pt(CN)₄, K₃Co(CN)₆, K₃Cr(CN)₆ K₃Fe(CN)₆, K₃Mn(CN)₆, K₂Pt(CN)₆, K₄Ru(CN)₆.

Solutions A and B must be mixed together and stirred until they are completely transparent.

Precursors for MPM-CN/oxides electrocatalysts are prepared adding the desired amount of ceramic materials based on oxides with nanometric morphologies to either solution A or B or both. Examples of ceramic materials based on oxides with nanometric morphologies include: Ag₂O, Al₂O₃, Arsenic oxides, Au₂O₃, Bi₂O₃, CeO₂, Cobalt oxides, Chromium oxides, Copper oxides, EuO₂, Iron oxides, Ga₂O₃, HfO₂, Ir₂O₃, La₂O₃, MnO₂, Molybdenum oxides, Niobium oxides, Nd₂O₃, NiO, Osmium oxides, Lead oxides, PdO, PrO₂, Platinum oxides, Rhenium oxides, Rh₂O₃, Ruthenium oxides, Antimony oxides, Sc₂O₃, Selenium oxides, SiO₂, SmO, SnO₂, Tantalum oxides, TbO₂, Tellurium oxides, TiO₂, Vanadium oxides, Tungsten oxides, ZnO, ZrO₂.

Once the solution is well-mixed the resulting product must be let rest at room temperature. The chemical reaction is considered complete when one of the above-mentioned transitions (sol-gel and/or gel/plastic; coagulation and/or flocculation and/or precipitation) is observed. It may be necessary to wait for a few days for these reactions to occur.

Should the product have the features of a suspension, the excess solvent must be removed. This result can be achieved with two different procedures: a) filtration; or b) by drying the reaction mixture. This latter treatment is performed in a rotovapor at 60°C until a compact and homogeneous solid remains. The drying process may last a few days.

### Detailed description of STEP 2.

The precursor obtained in STEP 1 undergoes a pyrolysis process as described below. At first the precursor is kept under dynamic vacuum at 10⁻³ bar for 16-24 hours at 150-200°C, then the product is brought to a higher temperature (300-1200°C) for no longer than two hours. Lastly, a further pyrolysis process under a dynamic vacuum (10⁻³ bar) is performed at high temperature (400-1200°C), lasting between one and six hours.

### Detalied description of STEP 3.

The MPM-CN or MPM-CN/oxides electrocatalyst obtained after STEP 2 is finely ground, at first in a mortar and then in a ball mill and subsequently washed repeatedly with water so as to remove halides and other soluble reaction products.

The washed MPM-CN or MPM-CN/oxides electrocatalyst is activated through three washings in hydrogen peroxide, 10% vol., and is eventually dried and further ground with a ball mill.

The reaction between the chloride of the transition metal and the cyanometallate when the organic binder is present results in a compact and homogeneous precursor where the desired quantity of metallic centres is uniformly distributed (STEP 1). The pyrolysis process carried out under vacuum removes the oxygen and hydrogen atoms of the organic binder from the material; furthermore, it provides the energy necessary to activate the nucleation and growth of the carbon nitride-based clusters of the MPM-CN or MPM-CN/oxides electrocatalyst (STEP 2). The clusters are of nanometric size and have the programmed chemical composition. The ceramic materials based on oxides with nanometric morphologies, if they are present, provide a matrix featuring an extremely large surface area where the catalytic material based on mono-plurimetallic carbon nitrides can be supported. The carbon nitride deriving from the decomposition of the organic binder guarantees to the MPM-CN or MPM-CN/oxides electrocatalyst the electrical conductivity necessary for its operation (STEP 2). The main aim of the prolonged washing with bidistilled water is the removal of possible halide-based soluble derivatives: should they bind permanently on the active sites, they would compromise the catalytic activity of the MPM-CN or MPM-CN/oxides electrocatalyst (STEP 3). The treatment with hydrogen peroxide is performed so as to "clean" the external surface of the MPM-CN or MPM-CN/oxides electrocatalyst from impurities which could both poison the active catalytic sites and make the active area of the material smaller (STEP 3).

The main features of the invention are highlighted in the following descriptions which should be considered, together with the attached graphs, specific information concerning particular examples reported only for illustrative and not for limitative purposes.

### BRIEF DESCRIPTION OF THE DRAWINGS

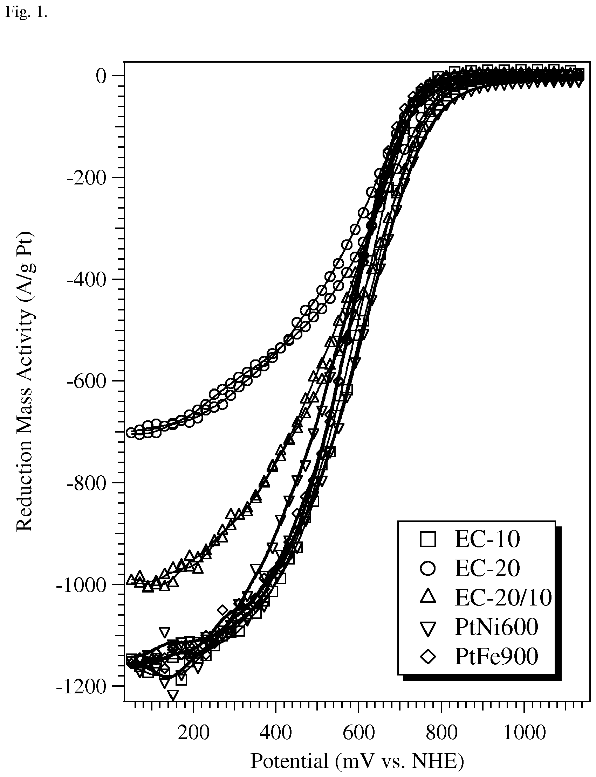

**Fig. 1****.** CV-TF-RDE profiles of the reduction mass activity of the electrocatalysts indicated in the graph determined by Cyclic Voltammetry (CV) using the TF-RDE method (Thin Film Rotating Disk Electrode). Measurements relative to the commercial electrocatalysts used as references are also reported. CV-TF-RDE measurements are collected at 100 mV/s, 1 bar of pure oxygen and at 60°C using as support electrolyte a 0.1 M solution of HClO₄.

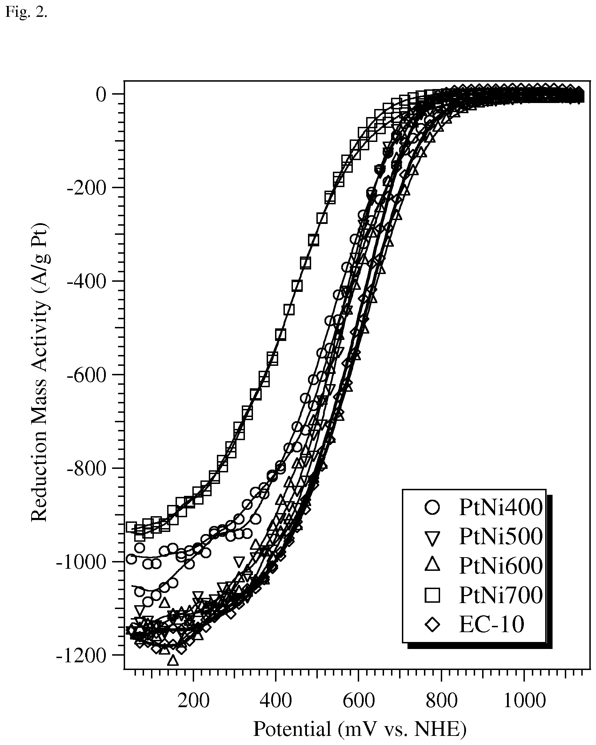

**Fig. 2****.** CV-TF-RDE profiles of the reduction mass activity of MPM-CN electrocatalysts including platinum and nickel carbon nitrides obtained applying different pyrolysis processes. The conditions of the experimental measurements are the same as those reported in Fig. 1.

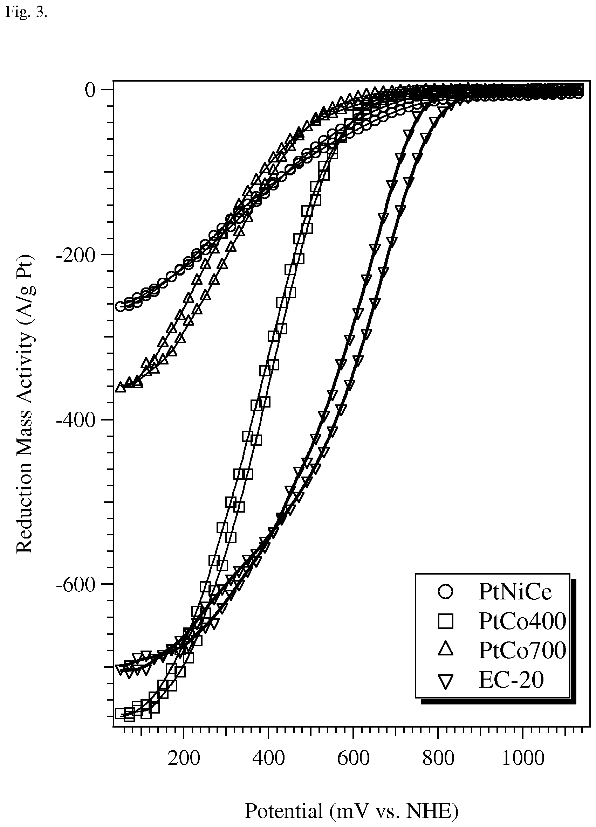

**Fig. 3****.** CV-TF-RDE profiles of the reduction mass activity of MPM-CN electrocatalysts including platinum and cobalt carbon nitrides obtained applying different pyrolysis processes and of the MPM-CN/oxide electrocatalyst including platinum-nickel carbon nitrides supported on nanometric CeO₂. The conditions of the experimental measurements are the same as those reported in Fig. 1.

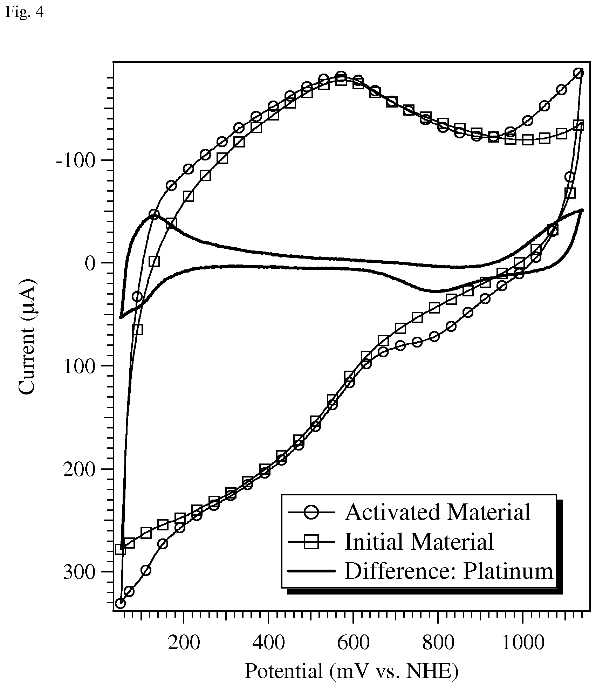

**Fig. 4****.** Evolution of the cyclic voltammogramms of the PtNi600 MPM-CN electrocatalyst determined with measurements with the CV-TF-RDE method in pure nitrogen atmosphere before (initial material) and after the activation with O₂ (activated material). The difference curve shows the typical CV profile of pure platinum. This curve allows the determination of the electrochemically-active area of the electrocatalysts proposed in this invention.

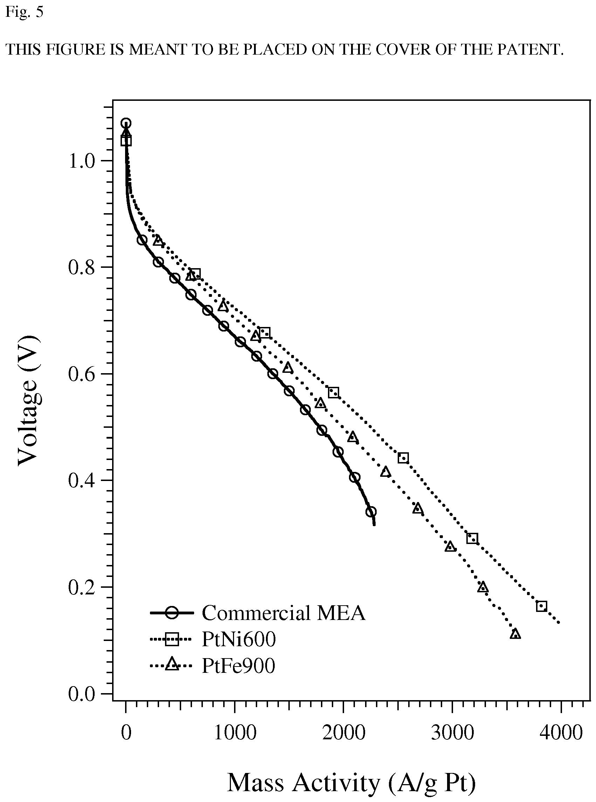

**Fig. 5****.** Polarization curves of the MEAs prepared with the PtNi600 and the PtFe900 materials, together with the commercial reference. Experimental conditions: T=87/80/87°C; H₂ dew point = 87°C; H₂ flux 800 seem; O₂ dew point = 85°C; O₂ flux 2000 seem; reagents pressure 65 psig.

### EXPERIMENTAL DATA

### EXAMPLE 1

### {MPM-CN electrocatalyst PtNi600}

This example reports the detailed description of the synthesis of a MPM-CN electrocatalyst for the cathodic reduction of oxygen based on platinum and nickel.

### STEP 1

4.46 g of sucrose were dissolved in 9 mL of milli-Q water; the resulting solution was divided into two aliquots, the former consisting of 4 mL, the latter of 5 mL. 832 mg of K₂PtCl₄ were dissolved into the former, yielding a deep red clear solution having a 0.5 M concentration in PtCl₄²⁻ complexes (Solution A). 1288 mg of K₂Ni(CN)₄ with a hydration degree of 30% were dissolved into the latter solution of water and organic binder, yielding a clear light yellow solution having a 0.75 M concentration in Ni(CN)₄²⁻ complexes (Solution B). Solution A was added dropwise into Solution B; the product was stirred for 15 minutes at room temperature and allowed to rest for three days. At the end of this period of time, on the bottom of the vessel a very thin light grey powder was found deposited under a clear, very light yellow solution. The sample was transferred into a quartz tube where the drying process was protracted for three days keeping the warming bath at 60°C. The final product was a viscous, light blue suspension, which is the precursor of the MPM-CN electrocatalyst.

### STEP 2

The quartz tube containing the precursor obtained at the end of STEP 1 was connected to a vacuum line and brought to 10⁻³ bar. The precursor placed under vacuum underwent a first pyrolysis process at 180°C for 24 hours; in this phase it appeared opaque and was emerald green. The resulting solid was then pyrolysed at 300°C for two hours under dynamic vacuum and was eventually allowed to rest. The obtained solid product looked like a blackish, very rough powder. After finely grinding it into a mortar, the product was re-introduced into a quartz tube, where it underwent a further pyrolysis process at 600°C under dynamic vacuum for two hours.

### STEP 3

The MPM-CN electrocatalyst obtained at the end of STEP 2 was removed from the tube, finely ground in a mortar and eventually washed four times with milli-Q water to remove the soluble byproducts and the chloride ions deriving from the chemical reaction. The MPM-CN electrocatalyst was dried under an IR lamp. At the end of each washing step the mother waters were separated from the MPM-CN electrocatalyst by centrifugation at 3000 rpm for 15 minutes.

The resulting MPM-CN electrocatalyst powders were then transferred to a glass beaker and treated with about 40 mL of hydrogen peroxide, 10% vol., as follows. About 5 mL of hydrogen peroxide were used to cover the MPM-CN electrocatalyst, over which a significant evolution of bubbles was observed. The thinnest powders became suspended, and when the bubble evolution stopped they were removed using a Pasteur pipette and transferred into a glass Petri capsule placed under an IR lamp to remove the remaining water. In the meantime, further 5 mL of hydrogen peroxide were placed in the beaker with the remaining MPM-CN electrocatalyst powders having a rougher granulometry, so as to obtain a more vigorous cleaning of the MPM-CN electrocatalyst and a more efficient breaking of each grain. This process was repeated until all the MPM-CN electrocatalyst was transferred into the Petri capsule and dried. The resulting MPM-CN electrocatalyst powders were ball-milled in an agate ball mill where they were ground for three hours.

### EXAMPLES 2-4

### {MPM-CN electrocatalysts PtNi400, PtNi500, PtNi700}

These examples include the synthesis and characterization procedures of MPM-CN electrocatalysts for the cathodic reduction of oxygen based on platinum and nickel. The preparation of the MPM-CN electrocatalysts is exactly the same as the one described in Example 1, with the only difference that the final pyrolysis process of STEP 2, lasting two hours, was performed at 400, 500 and 700°C for the MPM-CN electrocatalysts PtNi400, PtNi500 and PtNi700, respectively. The MPM-CN electrocatalysts, once they were recovered from the quartz tube, were treated, activated and tested as described in Example 1.

### EXAMPLE 5

### {MPM-CN/oxides electrocatalyst PtNiCe}

In this example are described the synthesis and characterization procedures of a MPM-CN/oxides electrocatalyst for the cathodic reduction of oxygen based on platinum and nickel supported on oxides with nanometric morphologies.

### STEP 1

4.46 g of sucrose were dissolved into 2 mL of water yielding a clear, viscous solution. Afterwards, 415 mg of K₂PtCl₄ were dissolved under stirring in 1 mL of water, yielding a clear, deep red solution (Solution A); 644 mg of K₂Ni(CN)₄ with a hydration degree of 30% were dissolved in 1 mL of water yielding a clear, light yellow solution (Solution B). At this time, 1 mL of the solution containing the organic binder was added to each of Solution A and Solution B, which were kept under stirring until clear solutions were obtained. 610 mg of CeO₂ nanopowders were then added to Solution B and stirred for 2 hours. Solution A was added dropwise to the Solution B: the resulting suspension was stirred for 16 hours before being transferred into a quartz tube.

### STEP 2

The precursor obtained at the end of STEP 1 underwent the following pyrolysis process: 180°C for 24 hours, followed by 300°C for two hours and by 550°C for two hours.

### STEP 3

MPM-CN/oxides electrocatalyst obtained at the end of STEP 2, once recovered from the quartz tube, was treated, activated and tested as described in Example 1.

### EXAMPLES 6-8

### {MPM-CN electrocatalysts PtCo400, PtCo500, PtCo700}

These examples include the synthesis and characterization procedures of MPM-CN electrocatalysts for the cathodic reduction of oxygen based on platinum and cobalt.

### STEP 1

4.46 g of sucrose were dissolved in 9 mL of milli-Q water; the resulting solution was divided into two aliquots, the former consisting of 4 mL, the latter of 5 mL. 832 mg of K₂PtCl₄ were dissolved into the former, yielding a deep red clear solution having a 0.5 M concentration in PtCl₄²⁻ complexes (Solution A). 378 mg of K₂Pt(CN)₄, hydrated, were dissolved into the second aliquot containing the organic binder yielding a clear solution (Solution B), where 955 mg of K₃Co(CN)₆ were further added. The resulting Solution B was perfectly clear, and consisted of water, organic binder, platinum and cobalt complexes. The Solution A was added dropwise into Solution B, stirred for 15 minutes at room temperature and allowed to rest for three days. During this time interval the resulting solution remained clear but it changed its colour from red to light yellow. The whole sample was transferred into a quartz tube connected to a rotovapor, and dried for six hours at 60°C. At the end a light yellow transparent solid sample was obtained.

### STEP 2

The quartz tube containing the precursor obtained at the end of STEP 1 was later connected to a vacuum line at 10⁻³ bar. The sample underwent a first pyrolysis process at 180°C for 24 hours and later pyrolysed at 400°C for two hours under dynamic vacuum. The resulting MPM-CN electrocatalyst looked like a very rough blackish powder, it was finely ground into a mortar and was labelled PtCo400. The PtCo500 and PtCo700 MPM-CN electrocatalysts were prepared by pyrolysing aliquots of PtCo400 at 500°C and 700°C for two hours, respectively.

### STEP 3

All the resulting MPM-CN electrocatalysts obtained at the end of STEP 2 were eventually treated, activated and tested as described in Example 1.

### EXAMPLE 9

### {MPM-CN electrocatalyst PtFe900}

This example describes the synthesis procedure of a MPM-CN electrocatalyst for the cathodic reduction of oxygen based on platinum and iron.

### STEP 1

4.46 g of sucrose were dissolved into 9 mL of milli-Q water. The solution was divided into two aliquots, the former consisting of 4 mL and the latter of 5 mL. 1 g of H₂PtCl₆ was dissolved into the former aliquot, yielding a yellowish solution (Solution A). 1260 mg of K₃Fe(CN)₆ were dissolved into the latter aliquot, yielding a yellow solution (Solution B). Solution A was added dropwise into the second, and allowed to rest for a few minutes. Almost instantly, a greenish gel was obtained. The gel was then transferred into a quartz tube and connected to a vacuum line as described in Example 1.

### STEP 2

The precursor obtained at the end of STEP 1 underwent the following pyrolysis process, always maintaining the dynamic vacuum: a) 16 hours at 200°C; b) 1 hour at 900°C; c) 4 hours at 700°C.

### STEP 3

The MPM-CN electrocatalyst obtained at the end of STEP 2 was recovered from the quartz tube and subsequently treated, activated and tested as described in Example 1.

### COMPARATIVE EXAMPLE

The catalytic activity of the MPM-CN electrocatalyst obtained as described in Example 1 was tested and compared with that of commercial electrocatalysts according to the procedure described below.

A weighed aliquot of the electrocatalyst was brought into suspension in a measured amount of milli-Q water by sonication into an ultrasonic bath for about one hour. The glassy carbon tip of a rotating electrode was mirror-polished with alumina powder, and a known aliquot of the suspension was transferred on top of it with a micropipette aiming at a platinum loading of about 4.7 µg Pt/cm². The water of the suspension was later removed by placing the tip under an IR lamp. The resulting electrocatalyst layer was later bound to the rotating electrode tip by covering it with a known amount of a solution obtained diluting 100 times with milli-Q water a commercial 5 wt% Nafion™ solution. The aim is to cover the electrocatalyst with a Nafion film about 150 nm thick, so as to obtain a good adhesion of the electrocatalyst without introducing diffusion barriers hindering the feeding of oxygen to the electrocatalyst during the measurement. Water was removed from the solution by drying under an IR lamp.

The electrode was later placed into an electrolytic solution consisting of perchloric acid with a concentration of 0.1 M, kept at 60°C. The electrode tip was always rotated at a fixed speed, 1600 rpm. The cyclic voltammetric measurements were collected in a potential window between 0.05 and 1.15 V vs. NHE, at a sweep rate of 100 mV/sec. The electrocatalyst activation was performed cycling the electrode for 15 hours at 20 mV/sec in nitrogen atmosphere. The electrocatalyst was further cleaned by continuing the cycling for six hours in a pure oxygen atmosphere, kept at the pressure of 1 bar.

In the presence of oxygen, under 0.9 V the cyclic voltammogramm shows a depression towards more negative currents due to the reduction of the oxygen on the surface of the electrocatalytic system. The net oxygen reduction current as a function of the potential was obtained by subtracting from the cyclic voltammogramm obtained under pure oxygen atmosphere the corresponding measure collected under nitrogen atmosphere. In this way the mass reduction activity of each electrocatalyst was obtained, expressed in A/g Pt. The effective platinum concentration in each electrocatalyst was determined by ICP-AES. In Tab. 1 and 2 are reported the results obtained for the tested electrocatalysts. EC-10, EC-20 and EC-20/10 abbreviations refer to the commercial electrocatalyst produced by ElectroChem Inc. used as reference electrocatalyst.

**Tab.1. Chemical composition of selected MPM-CN and MPM-CN/oxides electrocatalysts for PEFC and DMFC fuel cells.**

| Material | Pt (wt%) | Other Metals (wt%) |
|---|---|---|
| PtNi600 | 16.9 | Ni 9.7 K 2.1 |
| PtNi400 | 12.6 | Ni 8.2 K 5.0 |
| PtNi500 | 14.5 | Ni 8.8 K 4.7 |
| PtNi700 | 17.0 | Ni 9.9 K 2.0 |
| PtNiCe | 10.3 | Ni 6.0 K2.1Ce 12.7 |
| PtCo400 | 9.7 | Co 4.3 K4.0 |
| PtCo700 | 20.6 | Co 6.0 K 0.4 |
| PtFe900 | 17.9 | Fe 8.2 K 0.8 |
| EC-10 | 9.7 | Nil |
| EC-20 | 18.4 | Nil |
| EC-20/10 | 20.0 | Ru 10.0 |

The V^{∗}I curve obtained from cyclic voltammetric curves shows a maximum, reported on Tab.2., which provides an approximate estimate of the maximum reduction power which can be extracted by each electrocatalyst. Tab 2 also shows the potential this maximum is located at.

**Tab.2. Electrochemical features of selected MPM-CN and MPM-CN/oxides electocatalysts for PEFC and DMFC fuel cells.**

| Material | Mass Activity at 0.6 V (A/g Pt) | Maximum Mass Power¹⁾ (W/g Pt) |
|---|---|---|
| PtNi600 | 466 | 387 at 0.465 V |
| PtNi400 | 323 | 328 at 0.439 V |
| PtNi500 | 331 | 385 at 0.443 V |
| PtNi700 | 109 | 224 at 0.347 V |
| PtNiCe | 45 | 50 at 0.323 V |
| PtCo400 | 36 | 161 at 0.310 V |
| PtCo700 | 16 | 58 at 0.255 V |
| PtFe900 | 404 | 398 at 0.444 V |
| EC-10 | 500 | 412 at 0.463 V |
| EC-20 | 314 | 228 at 0.509 V |
| EC-20/10 | 411 | 309 at 0.474 V |

| | | |
|---|---|---|
| ¹⁾Values determined on the maximum of V^{∗}I curve. V and I are determined on the cyclic voltammetry curves. | | |

All the electrocatalysts mentioned on Tab. 1 and 2 were tested according to the same experimental protocol in the same conditions. All the electrodes were prepared trying to achieve the same platinum loading; this result was achieved with a relative error lower than 5%. The overall concentration of each deposited electrocatalyst was always between 25 and 49 µg/cm². The last value is in any case much lower than the limit suggested in the scientific literature, set equal to 100 µg/cm².

From the data reported in Tab. 1 and 2 it can be observed that the MPM-CN electrocatalyst prepared according to the procedure outlined in Example 1 shows performances similar to those of the best tested commercial electrocatalyst, in this case the EC-10 produced by ElectroChem Inc. As for the MPM-CN electrocatalyst prepared according to the procedure described in Example 9 it can be observed that the mass activity at 0.6 V is barely below that of the second best commercial electrocatalyst, i.e. EC-20/10, while its maximum mass power is better than that shown by the PtNi600 MPM-CN electrocatalyst and barely lower than that of the best tested commercial electrocatalyst.

Both of the above-mentioned MPM-CN electrocatalysts are characterized by performances very similar or markedly better in comparison with those of commercial electrocatalysts having a similar weight% of platinum, such as the EC-20 and the EC-20/10 produced by ElectroChem Inc.

Bimetal, MPM-CN electrocatalysts based on platinum and nickel show large reduction mass activities, while all the other MPM-CN and MPM-CN/oxides electrocatalysts which have not been quoted until this point show an electrocatalytic activity that even if it is observed at a lower potentials with respect to commercial reference electrocatalysts is nevertheless a significant fraction of theirs.

The MPM-CN and MPM-CN/oxides electrocatalysts described in the various examples reported above were also tested as electrocatalysts for the anode oxidation of the fuel introduced in the cell. It was observed that at the beginning of the activation with pure oxygen the hydrogen oxidation peaks could not be located, while at the end of this activation procedure they were easily detected in a nitrogen atmosphere. Therefore, it was decided to subtract from the cyclic voltammogramm collected under nitrogen atmosphere after the activation with pure oxygen the cyclic voltammogramms of the same electrocatalyst collected before this activation process. The difference between the two voltammogramms as a first approximation corresponds to the characteristic voltammogramm which can be associated to active platinum sites, active in the oxidation reaction of hydrogen and methanol. By integrating the area of the oxidation peaks allowed the determination of the active surface platinum area in the materials. Tab. 3. reports the values of the active specific area of the obtained electrocatalysts as referred to pure metallic platinum. Results indicate that the electrocatalysts described in this invention also show electrocatalytic activity for the anodic reactions and are promising candidates if compared with commercial systems for applications as anodic electrocatalysts.

**Tab. 3. Specific active area for the hydrogen oxidation reaction shown by selected MPM-CN electrocatalysts for PEFC and DMFC fuel cells.**

| Material | Specific Platinum area (m²/ g Pt) |
|---|---|
| PtNi600 | 23 |
| PtFe900 | 28 |
| EC-10 | 53 |
| EC-20 | 55 |

| | |
|---|---|
| The specific active area is referred to that shown by pure platinum. | |

PtNi600 and PtFe900 MPM-CN electrocatalysts were used in the preparation of membrane-electrode assemblies (MEAs) and tested as cathode electrocatalysts in a single fuel cell. The amount of electrocatalyst used to prepare the MEAs was chosen so as to obtain a Pt loading equal to about 0.4 mg Pt/cm² of MEA. A commercial MEA produced by ElectroChem. Inc. having a Pt loading at the cathode equal to 1 mg Pt/cm² of MEA was also tested in the same conditions as reference. The resulting polarization curves are shown on Fig. 5.

## Claims

1. Method for the production of anodic and cathodic electrocatalysts made of mono- and plurimetallic clusters supported on carbon nitrides consisting of the following three steps: in the first step a precursor is prepared, in the second step the precursor undergoes a pyrolysis process, said pyrolysis process being performed in an inert Ar and/or N₂ atmosphere, or under vacuum, and in the third step the resulting product is activated in a chemical and/or in an electrochemical way, wherein the precursor is prepared through sol-gel reactions by mixing two distinct solutions A and B, solution A being made of either water or an organic solvent, an organic binder and by one or more compounds containing a transition metal coordinated by halides and solution B being constituted by either water or an organic solvent, an organic binder and by one or more cyanometallates.

2. The method according to claim 1, **characterized in that** said halide is selected from chlorine, bromine and iodine.

3. The method according to any of the preceding claims, **characterized in that** said compound containing a transition metal coordinated by halides is selected from: HAuCl₄, H₂IrCl₆, H₂PtCl₆, Li₂PdCl₄, (NH₄)₂IrCl₆, (NH₄)₂OsCl₆, (NH₄)₂PdCl₄, (NH₄)₂PdCl₆, (NH₄)₂PtCl₄, (NH₄)₂PtCl₆, (NH₄)₃RhCl₆, (NH₄)₂RuCl₆, KAuCl₄, KPt(NH₃)Cl₃, K₂PdCl₄, K₂PtCl₄, K₂PdCl₆, K₂PtCl₆, K₂ReCl₆, K₂RhCl₆ K₂H₂IrCl₆, K₂H₂OsCl₆, K₃IrCl₆, K₃H₃RuCl₆, Na₂IrCl₆, Na₂OsCl₆, Na₂PdCl₄, Na₂PtCl₆, Na₃RhCl₆, CrCl₃, IrCl₃, FeCl₃, NiCl₂, OsCl₃, PdCl₂, PtCl₂, PtCl₄, RhCl₃, RuCl₃, ReCl₅, SnCl₄, VCl₃, VCl₄, WCl₄, WCl₆ and ZrCl₄.

4. The method according to any of the preceding claims, **characterized in that** said cyanometallate is selected from: KAg(CN)₂, KAu(CN)₂, K₂Ni(CN)₄ K₂Pd(CN)₄, K₂Pt(CN)₄, K₃Co(CN)₆, K₃Cr(CN)₆, K₃Fe(CN)₆, K₃Mn(CN)₆, K₂Pt(CN)₆ and K₄Ru(CN)₆.

5. The method according to any of the preceding claims, **characterized in that** said electrocatalyst is supported on one or more oxides.

6. The method according to claim 5, **characterized in that** said oxide is selected from: Ag₂O, Al₂O₃, Arsenic oxides, Au₂O₃, Bi₂O₃, CeO₂, Cobalt oxides, Chromium oxides, Copper oxides, EuO₂, Iron oxides, Ga₂O₃, HfO₂, Ir₂O₃, La₂O₃, MnO₂, Molybdenum oxides, Niobium oxides, Nd₂O₃, NiO, Osmium oxides, Lead oxides, PdO, PrO₂, Platinum oxides, Rhenium oxides, Rh₂O₃, Ruthenium oxides, Antimony oxides, Sc₂O₃, Selenium oxides, SiO₂, SmO₅, SnO₂, Tantalum oxides, TbO₂, Tellurium oxides, TiO₂, Vanadium oxides, Tungsten oxides, ZnO and ZrO₂.

7. The method according to any of the preceding claims, **characterized in that** said organic binder is any molecule, macromolecule or macromolecular system having in its structure functional groups selected from hydroxyl, amino, amide, ester, phosphine and nitrile.

8. The method according to claim 7, **characterized in that** said molecule, macromolecule or macromolecular system having in its structure hydroxyl functional groups is selected from: sugars, alcohols, polyalcohols, polyesters, polyethers, amides, polyamides, polyacrilates and polyimides.

9. The method according to any of the preceding claims, **characterized in that** applying to the precursors a pyrolysis process consists of at least two steps, the first step being executed at a temperature ranging from 300 and 400 °C and the second step being executed at a temperature ranging from 400 and 900 °C.

10. The method according to claim 9, **characterized by** comprising further thermal treatments at temperatures lower than 400 °C and/or higher than 500 °C, wherein said further thermal treatments are performed in an inert Ar and/or N₂ atmosphere, or under vacuum.

11. An anodic or cathodic electrocatalyst obtainable from the method according to any of the preceding claims.

12. Use of an anodic electrocatalyst according to claim 11 for fuel oxidation.

13. Use of a cathodic electrocatalyst according to claim 11 for oxygen reduction.

## Patentansprüche

1. Verfahren für die Herstellung von anodischen und kathodischen Elektrokatalysatoren aus mono- und mehrmetallischen Clustern, welche auf Karbonnitriden geträgert sind, bestehend aus den folgenden drei Schritten:
im ersten Schritt wird ein Präkursor hergestellt, im zweiten Schritt wird der Präkursor einem Pyrolyseverfahren unterzogen, wobei das Pyrolyseverfahren in einer interten Ar- und/oder N₂-Atmosphäre oder unter Vakuum durchgeführt wird, und im dritten Schritt wird das resultierende Produkt in einem chemischen und/oder einem elektrochemischen Weg aktiviert,
wobei der Präkursor durch Sol-Gel Reaktionen durch Mischen von zwei verschiedenen Lösungen A und B hergestellt wird, wobei die Lösung A entweder aus Wasser oder einem organischen Lösungsmittel, einem organischen Binder und einer oder mehreren Verbindungen, welche ein durch Halide koordiniertes Übergangsmetall enthält/enthalten, besteht, und die Lösung B aus entweder Wasser oder einem organischem Lösungsmittel, einem organischem Binder und einem oder mehreren Cyanometallaten besteht.

2. Verfahren gemäß Anspruch 1, **dadurch gekennzeichnet, dass** das Halid aus Chlor, Brom und lod ausgewählt ist.

3. Verfahren gemäß einem vorhergehenden Ansprüche, **dadurch gekennzeichnet, dass** die Verbindung, welche ein durch Halide koordiniertes Übergangsmetall enthält, ausgewählt ist aus:
HAuCl₄, H₂IrCl₆, H₂PtCl₆, Li₂PdCl₄, (NH₄)₂IrCl₆, (NH₄)₂OsCl₆, (NH₄)₂PdCl₄, (NH₄)₂PdCl₆, (NH₄)₂PtCl₄, (NH₄)₂PtCl₆, (NH₄)₃RhCl₆, (NH₄)₂RuCl₆, KAuCl₄, KPt(NH₃)Cl₃, K₂PdCl₄, K₂PtCl₄, K₂PdCl₆, K₂PtCl₆, K₂ReCl₆, K₂RhCl₆, K₂H₂IrCl₆, K₂H₂OsCl₆, K₆IrCl₆, K₃H₃RuCl₆, Na₂IrCl₆, Na₂OsCl₆, Na₂PdCl4, Na₂PtCl₆, Na₆RhCl₆, CrCl₃, IrCl₃, FeCl₃, NiCl₂, OsCl₃, PdCl₂, PtCl₂, PtCl₄, RhCl₃, RuCl₃, ReCl₅, SnCl₄, VCl₃, VCl₄, WCl₄, WCl₆ und ZrCl₄.

4. Verfahren gemäß einem der vorhergehenden Ansprüche, **dadurch gekennzeichnet, dass** das Cyanometallat ausgewählt ist aus: KAg(CN)₂, KAU(CN)₂, K₂Ni(CN)₄, K₂Pd(CN)₄, K₂Pt(CN)₄, K₃Co(CN)₆, K₃Cr(CN)₆, K₃Fe(CN)₆, K₃Mn(CN)₆, K₂Pt(CN)₆ und K₄Ru(CN)₆.

5. Verfahren gemäß einem der vorhergehenden Ansprüche, **dadurch gekennzeichnet, dass** der Elektrokatalysator auf einem oder mehreren Oxid(en) geträgert ist.

6. Verfahren gemäß Anspruch 5, **dadurch gekennzeichnet, dass** das Oxid ausgewählt ist aus:
Ag₂O, Al₂O₃, Arsenoxiden, Au₂O₃, Bi₂O₃, CeO₂, Kobaltoxiden, Chromoxiden, Kupferoxiden, EuO₂, Eisenoxiden, Ga₂O₃, HfO₂, Ir₂O₃, La₂O₃, MnO₂, Molybdänoxiden, Nioboxiden, Nd₂O₃, NiO, Osmiumoxiden, Bleioxiden, PdO, PrO₂, Platinoxiden, Rheniumoxiden, Rh₂O₃, Rutheniumoxiden, Antimonoxiden, Sc₂O₃, Selenoxiden, SiO₂, SmO₅, SnO₂, Tantaloxiden, TbO₂, Telluroxiden, TiO₂, Vanadiumoxiden, Wolframoxiden, ZnO und ZrO₂.

7. Verfahren gemäß einem der vorhergehenden Ansprüche, **dadurch gekennzeichnet, dass** der organische Binder ein Molekül, Makromolekül oder makromolekulares System ist, welches in seiner Struktur funktionelle Gruppen aufweist, welche ausgewählt sind aus: Hydroxyl, Amino, Amid, Ester, Phosphine und Nitril.

8. Verfahren gemäß Anspruch 7, **dadurch gekennzeichnet, dass** das Molekül, Makromolekül oder makromolekulare System, welches in seiner Struktur funktionelle Hydroxylgruppen aufweist, ausgewählt ist aus: Zuckern, Alkoholen, Polyalkoholen, Polyestern, Polyethern, Amiden, Polyamiden, Polyacrylaten, Polyimiden.

9. Verfahren gemäß einem der vorhergehenden Ansprüche, **dadurch gekennzeichnet, dass** das einem Pyrolyseverfahren Unterziehen der Präkursoren mindestens aus zwei Schritten besteht, wobei der erste Schritt bei einer Temperatur von 300 bis 400°C ausgeführt wird, und der zweite Schritt bei einer Temperatur von 400 bis 900°C ausgeführt wird.

10. Verfahren gemäß Anspruch 9, **dadurch gekennzeichnet, dass** es weiterhin Wärmebehandlungen bei Temperaturen niedriger als 400°C und/oder höher als 500°C aufweist, wobei die weiteren Wärmebehandlungen in einer inerten Ar- und/oder N₂-Atmosphäre oder unter Vakuum ausgeführt werden.

11. Anodischer oder kathodischer Elektrokatalysator, erhältlich durch das Verfahren gemäß einem der vorhergehenden Ansprüche.

12. Verwendung eines adonischen Elektrokatalysators gemäß Anspruch 11 zur Oxidation von Brennstoffen.

13. Verwendung eines kathodischen Elektrokatalysators gemäß Anspruch 11 zur Sauerstoffreduktion.

## Revendications

1. Procédé de production d'électrocatalyseurs anodiques et cathodiques se composant d'agrégats mono- et plurimétalliques supportés sur des nitrures de carbone constitué par les trois étapes suivantes : dans la première étape, un précurseur est préparé, dans la deuxième étape, le précurseur subit un processus de pyrolyse, ledit processus de pyrolyse étant réalisé sous une atmosphère d'Ar et/ou N₂ inerte, ou sous vide, et dans la troisième étape, le produit résultant est activé par voie chimique et/ou électrochimique, dans lequel le précurseur est préparé par le biais de réactions sol-gel en mélangeant deux solutions A et B distinctes, la solution A se composant d'eau ou d'un solvant organique, d'un liant organique et d'un ou plusieurs composés contenant un métal de transition coordonné par des halogénures et la solution B se composant d'eau ou d'un solvant organique, d'un liant organique et d'un ou plusieurs cyanométallates.

2. Procédé selon la revendication 1, **caractérisé en ce que** ledit halogénure est choisi parmi le chlore, le brome et l'iode.

3. Procédé selon l'une quelconque des revendications précédentes, **caractérisé en ce que** ledit composé contenant un métal de transition coordonné par des halogénures est choisi parmi : HAuCl₄, H₂IrCl₆, H₂PtCl₆, Li₂PdCl₄, (NH₄)₂IrCl₆, (NH₄)₂OsCl₆, (NH₄)₂PdCl₄, (NH₄)₂PdCl₆, (NH₄)₂PtCl₄, (NH₄)₂PtCl₆, (NH₄)₃RhCl₆, (NH₄)₂RuCl₆, KAuCl₄, KPt(NH₃)Cl₃, K₂PdCl₄, K₂PtCl₄, K₂PdCl₆, K₂PtCl₆, K₂ReCl₆, K₂RhCl₆, K₂H₂IrCl₆, K₂H₂OsCl₆, K₃IrCl₆, K₃H₃RuCl₆, Na₂IrCl₆, Na₂OsCl₆, Na₂PdCl₄, Na₂PtCl₆, Na₃RhCl₆, CrCl₃, IrCl₃, FeCl₃, NiCl₂, OsCl₃, PdCl₂, PtCl₂, PtCl₄, RhCl₃, RuCl₃, ReCl₅, SnCl₄, VCl₃, VCl₄, WCl₄, WCl₆ et ZrCl₄.

4. Procédé selon l'une quelconque des revendications précédentes, **caractérisé en ce que** ledit cyanométallate est choisi parmi : KAg(CN)₂, KAu(CN)₂, K₂Ni(CN)₄, K₂Pd(CN)₄, K₂Pt(CN)₄, K₃Co(CN)₆, K₃Cr(CN)₆, K₃Fe(CN)₆, K₃Mn(CN)₆, K₂Pt(CN)₆ et K₄Ru(CN)₆.

5. Procédé selon l'une quelconque des revendications précédentes, **caractérisé en ce que** ledit électrocatalyseur est supporté sur un ou plusieurs oxydes.

6. Procédé selon la revendication 5, **caractérisé en ce que** ledit oxyde est choisi parmi : Ag₂O, Al₂O₃, les oxydes d'arsenic, Au₂O₃, Bi₂O₃, CeO₂, les oxydes de cobalt, les oxydes de chrome, les oxydes de cuivre, EuO₂, les oxydes de fer, Ga₂O₃, HfO₂, Ir₂O₃, La₂O₃, MnO₂, les oxydes de molybdène, les oxydes de niobium, Nd₂O₃, NiO, les oxydes d'osmium, les oxydes de plomb, PdO, PrO₂, les oxydes de platine, les oxydes de rhénium, Rh₂O₃, les oxydes de ruthénium, les oxydes d'antimoine, SC₂O₃, les oxydes de sélénium, SiO₂, SmO₅, SnO₂, les oxydes de tantale, TbO₂, les oxydes de tellure, TiO₂, les oxydes de vanadium, les oxydes de tungstène, ZnO et ZrO₂.

7. Procédé selon l'une quelconque des revendications précédentes, **caractérisé en ce que** ledit liant organique est n'importe quelle molécule, macromolécule ou n'importe quel système macromoléculaire ayant dans sa structure des groupes fonctionnels choisis parmi les groupes hydroxyle, amino, amide, ester, phosphine et nitrile.

8. Procédé selon la revendication 7, **caractérisé en ce que** ladite molécule, macromolécule ou ledit système macromoléculaire ayant dans sa structure des groupes fonctionnels hydroxyle est choisi parmi : les sucres, les alcools, les polyols, les polyesters, les polyéthers, les amides, les polyamides, les polyacrylates et les polyimides.

9. Procédé selon l'une quelconque des revendications précédentes, **caractérisé en ce que** l'application d'un processus de pyrolyse aux précurseurs est constituée par au moins deux étapes, la première étape étant exécutée à une température comprise dans la plage allant de 300 à 400 °C et la seconde étape étant exécutée à une température comprise dans la plage allant de 400 à 900 °C.

10. Procédé selon la revendication 9, **caractérisé en ce qu'**il comprend des traitements thermiques supplémentaires à des températures inférieures à 400 °C et/ou supérieures à 500 °C, dans lequel lesdits traitements thermiques supplémentaires sont réalisés sous une atmosphère d'Ar et/ou N₂ inerte, ou sous vide.

11. Électrocatalyseur anodique ou cathodique pouvant être obtenu par le procédé selon l'une quelconque des revendications précédentes.

12. Utilisation d'un électrocatalyseur anodique selon la revendication 11 pour l'oxydation de carburant.

13. Utilisation d'un électrocatalyseur cathodique selon la revendication 11 pour la réduction d'oxygène.
